# EUROPEAN PATENT APPLICATION

(11) **EP 1 445 817 A2**
(43) Date of publication of application: **11.08.2004**
(21) Application number: 03256192.0
(22) Date of filing: 01.10.2003
(51) Int. Cl.: H01M 8/12, H01M 8/24

(54) **Fuel cell and method for forming**

(30) Priority: 18.10.2002 US 273607
(71) Applicant: Hewlett-Packard Development Company, L.P., Houston, Texas 77070 (US)
(72) Inventor: Mardilovich, Peter, Corvallis, OR 97330 (US); Herman, Gregory S., Albany, OR 97321 (US); Champion, David, Lebanon, OR 97355 (US); O'Neil, James, Corvallis, OR 97330 (US)
(74) Representative: Jackson, Richard Eric

(57) **Abstract**

A method for making a fuel cell has steps of forming a sacrificial layer (202) on a substrate (204), forming a fuel cell (208, 212, 214) on the substrate (204), forming a connector (210, 216) that connects the fuel cell (208, 212, 214) to the substrate (204), and removing the sacrificial layer (202). After the sacrificial layer (202) has been removed, the fuel cell (208, 212, 214) is generally free standing over a planar surface (206) of the substrate (204) with a gap (222) defined therebetween.

## Description

### FIELD OF THE INVENTION

The invention is in the fuel cell field. The invention particularly concerns thin film fuel cells.

### BACKGROUND OF THE INVENTION

The desire for safe, low pollutant, flexible power generation has caused increased interest in fuel cells. A fuel cell is generally an electrochemical device that directly combines a fuel and an oxidant, such as hydrogen and oxygen, to produce electricity and water. It has an anode or fuel electrode and a cathode or air electrode separated by an electrolyte. In the case of solid oxide fuel cell systems hydrogen is oxidized to protons on the anode with an accompanying release of electrons. At the anode, oxygen ions reacts with these protons to form water, consuming electrons in the process. Electrons flow from the anode to the cathode through an external load. These electrons are then available for the reduction of molecular oxygen to form oxygen anions and the circuit is completed by ionic current transport through the electrolyte to the anode. Fuel cells operating on hydrogen do not emit toxic gasses. They operate quietly and have a potential efficiency of up to about 80 percent.

One particular class of fuel cells are known as thin film fuel cells that generally have a solid electrolyte. Often, a solid oxide electrolyte is used. The electrolyte layer is sandwiched between an anode and a cathode layer. The layers may be deposited on a micro scale using techniques such as chemical vacuum deposition (CVD), combustion CVD (CCVD), physical vacuum deposition (PVD), screen printing, slurry deposition, atomic layer deposition, and the like, and may be supported on a substrate. Thin film cells are desirable for use in applications such as portable electronics and micro-electronics.

Some problems with thin film solid oxide fuel cells remain unresolved. For example, the high operating temperature range of the cells can present problems. Because each of the anode, cathode, electrolyte, and substrate layers may have different coefficients of thermal expansion, they may expand and contract by different amounts during thermal cycling. This can cause stressing, cracking, and delamination of the layers. Another problem relates to the need to provide gaseous access to the lowermost layer of the thin film cell. Typically, a passage must be created extending through the underlying substrate in the region adjacent to the lowest layer to provide access.

### SUMMARY OF THE INVENTION

According to the invention, a method for making a fuel cell has steps of forming a sacrificial layer on a substrate, forming a fuel cell on the sacrificial layer, connecting the fuel cell to the substrate, and removing the sacrificial layer to define a gap between the fuel cell and the substrate.

### BRIEF DESCRIPTION OF THE DRAWINGS

FIG. 1 is a flowchart illustrating an exemplary preferred embodiment of a method of the invention;
FIGS. 2(a)-(e) are schematic side views of an exemplary preferred fuel cell apparatus of the invention in different stages of formation;
FIGS. 3(a)-(e) are schematic top views of the exemplary preferred fuel cell embodiment of FIG. 2 in various stages of formation;
FIG. 4(a) is a top view of the exemplary fuel cell of FIG. 3(d), and FIGS. 4(b)-(d) are cross sections of the fuel cell of FIG. 4(a) taken along the lines 4(b)-4(b), 4(c)-4(c), and 4(d)-4(d) of that FIG.;
FIGS. 5(a)-(e) are schematic side views of an additional exemplary preferred fuel cell apparatus of the invention in various stages of formation; and
FIG. 6 is a schematic side view of an additional exemplary preferred fuel cell apparatus of the invention.

### DETAILED DESCRIPTION OF THE INVENTION

The present invention is directed to thin film fuel cells as well as methods for making thin film fuel cells. Preferred examples of method and apparatus embodiments of the invention include single chamber solid oxide fuel cells that are on a thin film scale, and methods for making the same.

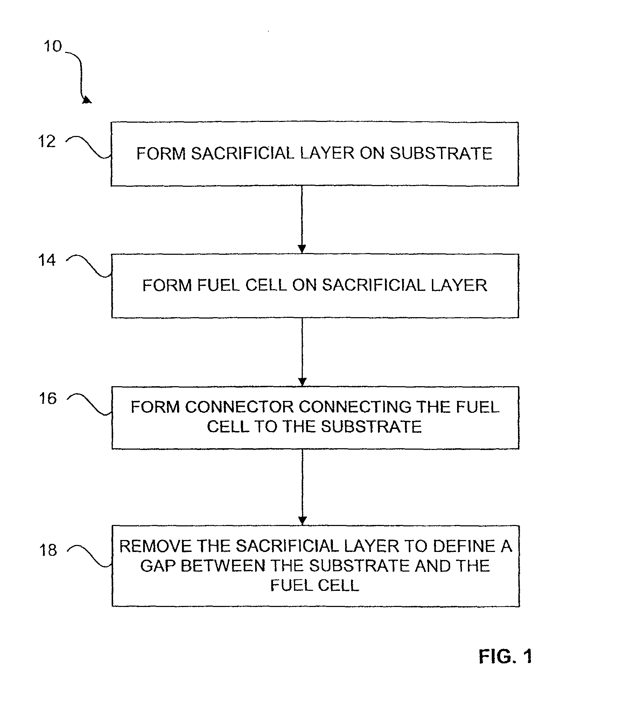

With reference now made to the flowchart of FIG. 1, a preferred method embodiment of the invention is shown generally at 10. In an initial step, a sacrificial layer is formed on a substrate (block 12). A fuel cell is then formed on the sacrificial layer (block 14), and connected to the substrate (block 16). The sacrificial layer is then removed by chemical etching or other suitable steps to define a gap between the fuel cell and the substrate (block 18). As a result, the fuel cell is supported by the connector over the substrate, and thereby generally free standing on the substrate.

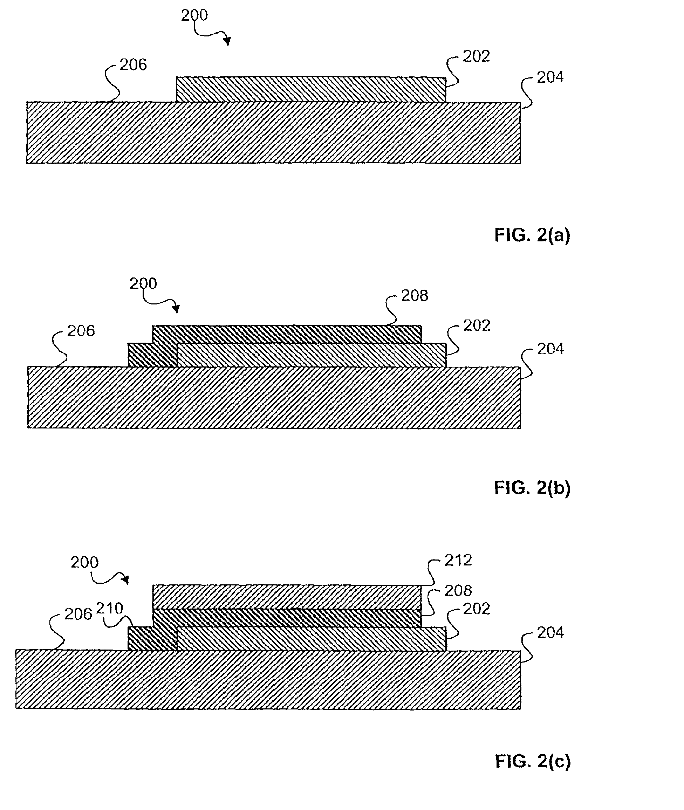

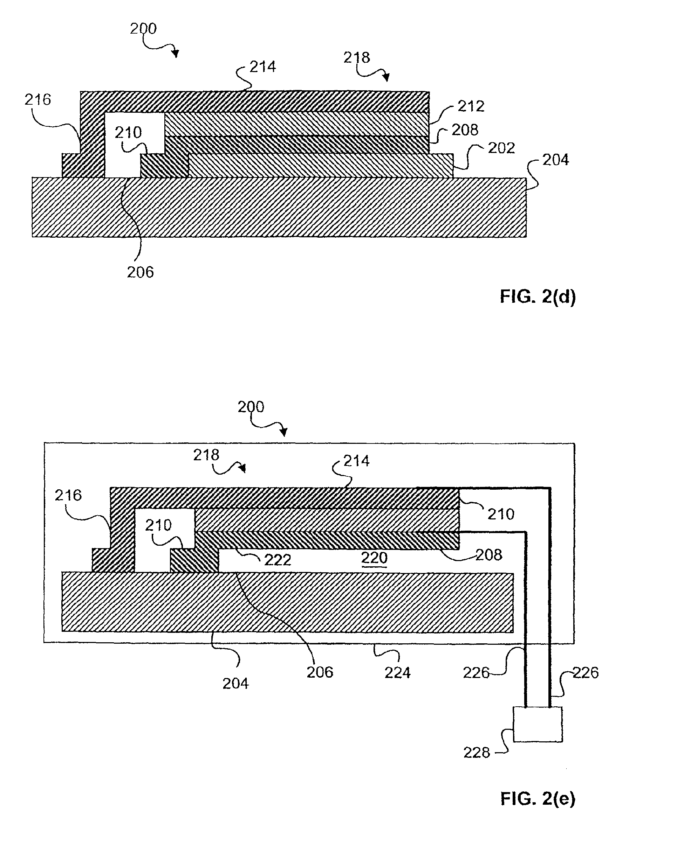

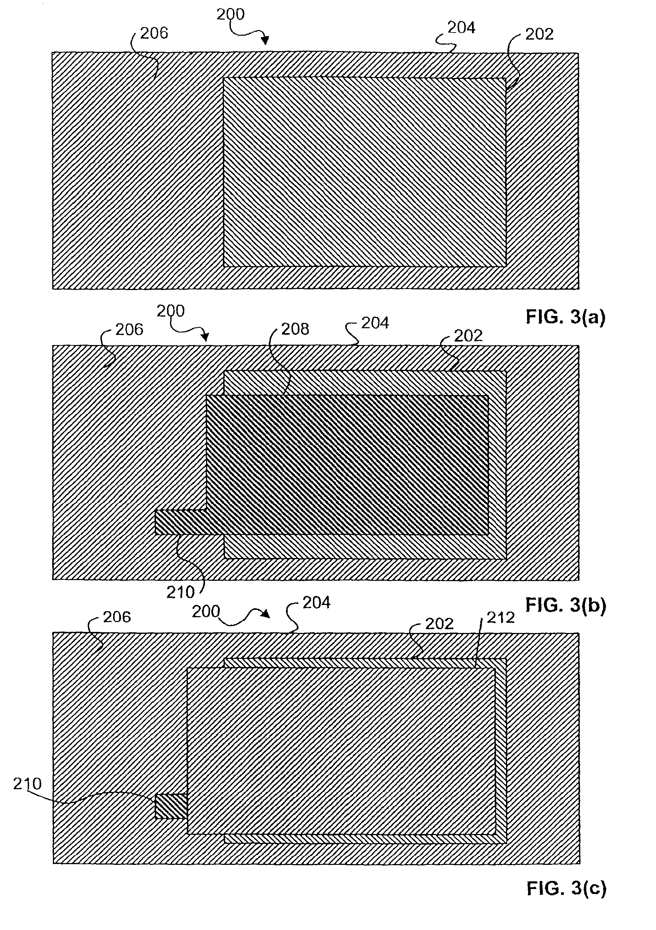

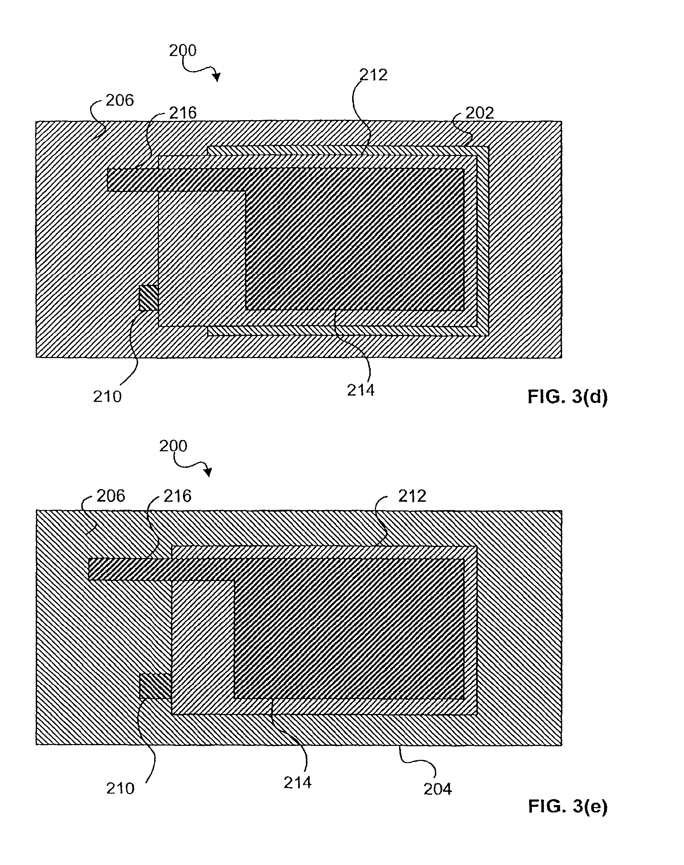

The exemplary preferred method of the invention may be more fully illustrated by consideration of the fuel cell apparatus embodiment shown generally at 200 in the schematic FIG. 2(a)-(e) and FIG. 3(a)-(e) in various stages of formation. In considering these FIGS., as well as other FIGS. attached hereto, it will be appreciated that the present invention is directed to a fuel cell apparatus in addition to methods for making a fuel cell apparatus. Accordingly, it will also be appreciated that description made herein in regards to an invention method embodiment may be useful in describing an apparatus embodiment, and vice versa. For example, FIGS. 2-6 will be useful in illustrating exemplary methods as well as an exemplary apparatuses of the invention.

FIGS. 2(a) and 3(a) illustrate a sacrificial layer 202 formed on a substrate 204. The sacrificial layer 202 is formed on a generally planar surface 206 of the substrate 204. The sacrificial layer 202 may be formed on the substrate 204 using techniques that are known in the art, including for example vapor deposition, sputtering, CVD, CCVD, PVD, screen printing, slurry deposition, atomic layer deposition, and the like. The sacrificial layer 202 may be made of a suitable material, with examples including, but not limited to metals such as Ti, Cu, Al, semiconducting materials such as poly-Si, Si-Ge, oxides of silicon, aluminum, and various spin-on-glasses. The substrate 204 is preferably a dielectric, but may be a conductor with a dielectric insulating layer. The substrate 204 may be made of a suitable material, with examples including, but not limited to, steels such as high temperature stainless steel (with an oxide layer), titanium, or oxides of titanium or aluminum. Advantageously, the present invention may be practiced using a substrate made of a material that is resistant to deformation and other defects that may result upon exposure to heat and layer processing techniques such as etching. For example, the substrate 204 may be made of aluminum oxide (alumina) to take advantage of its relative low cost and coefficient of thermal expansion that is relatively close to those of typical solid oxide fuel cell layers.

As best shown by FIGS. 2(b) and 3(b), an anode layer 208 is formed on the sacrificial layer 202. The anode layer 208 may be made of a suitable material and formed on the sacrificial layer 202 using steps as are known in the art. By way of example, the anode 208 may comprise a metal such as Ni, a metal/ceramic composite (cermet) such as Ni-yttria stabilized zirconia, Ni or Cu modified doped ceria (e.g., Ce_{0.8}Sm_{0.2}O_{1.9}, Ce_{0.9}Gd_{0.1}O_{1.9}). The anode 208 may be formed through steps of vapor deposition, sputtering, CVD, CCVD, PVD, screen printing, slurry deposition, atomic layer deposition, and the like. The anode 208 may be dense, but is most preferably porous. A connector that preferably is an integral connector portion 210 of the anode layer 208 is formed linking the anode layer to the generally planar surface 206. As used herein the term "integral" is intended to broadly refer to a condition of being continuous and of the same body. Accordingly, the integral connector portion 210 may be formed substantially simultaneously with the anode layer 208. Preferably the connector portion 210 is formed over an edge of the sacrificial layer 202 to contact the surface 206.

FIGS. 2(c) and 3(c) illustrate a solid oxide electrolyte layer 212 formed on the anode layer 208. The electrolyte layer 212 may be formed of a suitable material and using standard formation techniques. By way of example, the electrolyte layer 212 may be made of ceramic oxide ion conductors such as yttrium-doped zirconium oxide, or Sm- or Gd- doped CeO₂. Other suitable materials include, but are not limited to, doped perovskite oxides such as La_{0.9}Sr_{0.1}Ga_{0.8}Mg_{0.2}O₃, proton conducting perovskites BaZrO₃, SrCeO₃, and BaCeO₃; and other proton exchange ceramics. The electrolyte layer 212 may be formed through suitable methods such as vapor deposition, sputtering, CVD, CCVD, PVD, screen printing, slurry deposition, atomic layer deposition, and the like.

A cathode layer 214 is formed on the electrolyte layer 212, as best shown in FIGS. 2(d) and 3(d). The cathode layer 214 may be porous or dense, but is preferably porous. Those knowledgeable in the art will appreciate that a number of materials and methods are suitable for forming the cathode layer 214. By way of example, the cathode may be made of an Ag compound, a cermet, and the like. Particular examples of cathodes include, but are not limited to, doped perovskites such as Sm_{0.5}Sr_{0.5}CoO₃, Ba_{0.8}La_{0.2}CoO₃, and Gd_{0.5}Sr_{0.5}CoO₃. Alternatively, the B sites of these perovskites may be doped with, for example, Fe or Mn.

The cathode layer 214 may be formed through layer formation steps that are generally known in the art, including by way of example, steps of vapor deposition, sputtering, CVD, CCVD, PVD, screen printing, slurry deposition, atomic layer deposition, and the like. A connector that preferably comprises an integral connector portion 216 of the cathode 214 is formed for connecting the cathode to the substrate's generally planar surface 206. In addition to providing mechanical strength, both the cathode connector portion 216 and anode connector 210 may communicate electrons, and may be linked to an electrical device through a circuit or other connection for providing current to the device.

Collectively, the anode 208, the electrolyte 212, and the cathode 214 form a fuel cell referred to generally at 218. In considering the individual layers 208, 212, and 214, it will be appreciated that orientation of the fuel cell 218 may vary according to design considerations. For example, it is contemplated that the fuel cell 218 could be formed with the anode layer 208 uppermost and the cathode layer 214 facing the gap 220. Further, the fuel cell 218 may additionally include a current collector connected to the anode and to the cathode for collecting current for use by an electric device or other load.

Following formation of the fuel cell 218, the sacrificial layer 202 is removed to define a gap 220 between the fuel cell 218 and the substrate generally planar surface 206 as illustrated by FIGS. 2(e) and 3(e). Removal of the layer 202 may be accomplished through suitable steps such as etching and the like. Once removed, the fuel cell 218 is generally free standing over the substrate planar surface 206, and is supported only by the connector portions 210 and 216. The bottom surface 222 of the anode 208 is now accessible from within the gap 220.

Preferably, the thickness of the sacrificial layer 202 is large enough so that sufficient gas flow will occur in the gap 220 for satisfactory operation of the fuel cell 218. A particular desired thickness may vary depending on such factors as intended fuel cell operating temperature, fuel cell materials of construction, thickness of the fuel cell layer materials, and the like. By way of example, a sacrificial layer of a thickness between about 0.1 microns and about 500 microns is believed to be useful, with an additional exemplary range between about 0.1 microns and about 100 microns.

The width, length and thickness of the anode layer 208, the electrolyte layer 212, and the cathode layer 214 may be as desired or as is suitable for particular design considerations that may include, for instance, desired level of current and/or voltage, available space, and the like. The dimensions of the layers 208, 212 and 214 are preferably optimized to allow a fuel-air mixture to react with the anode layer 208 and the cathode layer 214. Generally, the surface area of the anode 208, electrolyte 212 and cathode 214 is desirably maximized. The thickness may vary depending on factors such as the material of construction of the layers 208, 212, and 214, the area of the layers, the desired voltage and/or current, and the like. A thinner electrolyte layer 212 is generally desirable in that impedance decreases linearly with decreasing thickness. The electrolyte layer 212 must be thick enough, however, to provide suitable mechanical strength. Additionally, the anode and cathode layers should be thick enough to provide sufficient catalytic activity to support required fuel decomposition and oxygen reduction for desired voltage and/or current output, and in some cases provide suitable mechanical strength. It is believed that useful thickness ranges for the layers are between about 0.1 micron and about 500 microns for each of the layers, with a more preferable range of between about 0.5 micron and about 15 microns.

As shown by FIG. 2(e), a chamber 224 is preferably provided for containing the fuel cell assembly 200, with one or more ports (not illustrated) for communicating fuel and oxidizer gas to and from the fuel cell assembly 200. Those knowledgeable in the art will appreciate that the chamber 224 may take a particular form and configuration as may be desired for a particular application. By way of example, the chamber 224 may comprise a channel formed in a substrate, an enclosure constructed by joining walls together, and the like. A current collector 226 may also be provided for communicating current from the fuel cell 218 to a load such as an electrical device 228. Current collectors are generally known in the art and therefore need not be described in detail herein. They may include conductive elements such as metal strips or areas in contact with the anode 208 and/or cathode 214 layers. Further, it will be appreciated that the representation of FIG. 2(e) is schematic only, and that in practice it may be preferred to locate the current collector 226 proximate the layer connectors 216 and 210 for mechanical support.

As will be understood by those knowledgeable in the art, a solid oxide fuel cell 218 operates when fuel is oxidized on the surface of the anode layer 208 to positively charged ions and oxygen molecules are reduced to oxygen anions on the surface of the cathode layer 214. The anode layer 208 and the cathode layer 214 may be highly catalytically selective to aid in reaction in the single chamber apparatus 200. The electrolyte layer 212 serves to transport either the positively or negatively charged ions between the anode 208 and cathode 214. The fuel cell 218 may be exploited to produce current when the anode 208 and the cathode 214 are linked, for instance through the current collector 226, with an electrical device 228 or other load connected therebetween.

The freestanding configuration of the fuel cell 218 provides several valuable advantages. For example, because the fuel cell 218 is separated from the substrate 204 by the gap 220, it is generally free from the heat sink effects of the substrate 204. As a result, occurrences of thermal related stressing, cracking, and delamination in the fuel cell 218 are reduced. Additionally, the fuel cell 218 may be able to better maintain an elevated operating temperature due to the gap 220 that separates it from the substrate 204.

In considering the FIGS. 2 and 3, it will be appreciated that they are general schematic representations of the preferred fuel cell configuration only, and are not intended to represent an actual geometry or scale. For example, it will be appreciated that the connector portion 216 of the cathode layer 214 as depicted is representative only, and that in practice the connector portion 216 may not extend over free space as illustrated. By way of additional example, the connector portion 216 may be located on a different side of the fuel cell 200 than the anode connector portion 210. It is preferred, however, that the connectors be located along a single side in order to provide greater layer flexibility than would exist should the connectors be on two or more different sides.

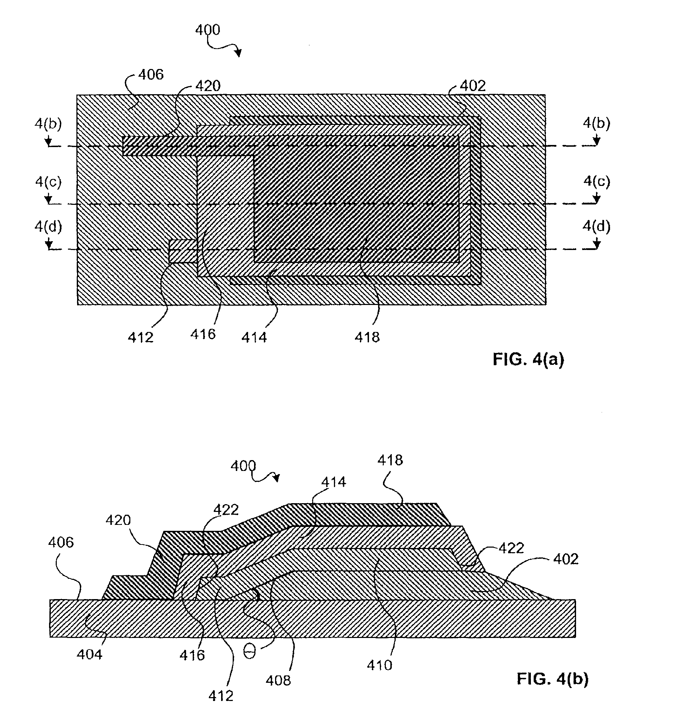

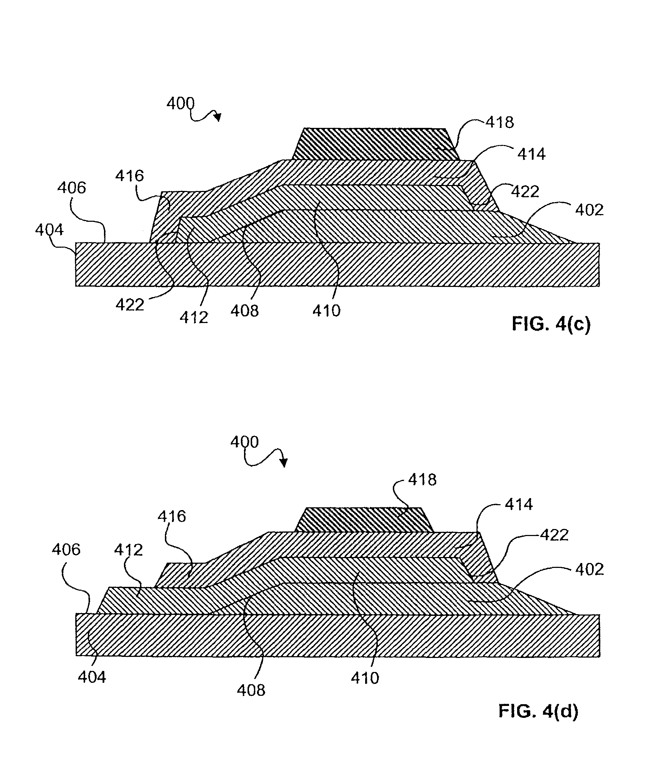

FIG. 4 is useful to more accurately represent an exemplary geometry of a preferred fuel cell apparatus 400 prior to removal of the sacrificial layer, and to illustrate the orientation of the layers to one another. FIG. 4(a) is top view of the preferred fuel cell apparatus 400, while the FIGS. 4(b)-4(d) show various cross section views of the fuel cell viewed along the lines as indicated by FIG. 4(a). A sacrificial layer 402 is deposited on a substrate 404, and in particular on a planar surface 406 of the substrate. As illustrated, the sacrificial layer 402 preferably has a sloped edge 408. Preferably, the edge 408 has an angle θ of between about 30° and about 60° to provide an advantageous geometry for reduced concentration of thermal and mechanical stress. An anode layer 410 is deposited on the sacrificial layer 402, with an integral connector portion 412 extending over the sloped edge 408 of the sacrificial layer 402 and extending to the substrate surface 406. As best shown by FIGS. 4(a) and (d), the connector portion 412 preferably extends along the substrate surface 406 to provide additional bonding strength and support.

An electrolyte layer 414 is deposited on the anode layer 410, and as shown by the views of FIGS. 4(c) and 4(d) has an integral connector portion 416 that passes over the anode connector portion 412 and extends to the substrate planar surface 406. A cathode layer 418 is deposited on the electrolyte layer 414, and as illustrated by FIG. 4(b) has a connector portion 420 that passes over the connector portion 416 and extends to the substrate planar surface 406.

As shown by FIG. 4, the electrolyte layer 414 is preferably deposited to protect the anode layer 410 from contact with the cathode layer 418. For example, the electrolyte layer 414 preferably wraps around and covers both edges 422 of the anode layer 410, as shown by FIGS. 4(b) and (c). It will be understood that the electrolyte layer 414 may additionally cover the edges that are not shown in the views of FIGS. 4(b) and (c) and that are perpendicular to the edges 422 shown. Also, as shown by FIG. 4(a), the fuel cell apparatus 400 preferably is configured with the cathode layer 418 having a smaller perimeter size than the underlying electrolyte layer 422, which in turn has a larger perimeter size than the underlying anode layer 410. This advantageously helps to protect the anode and cathode layers 410 and 418 from contact with one another.

It will be appreciated that the connector portions of one or more of the layers 410, 414, and 418 could be oriented along different sides of the sacrificial layer 402 in addition to or as an alternative to the connector portions shown. By way of example, the cathode layer connector portion 420 could extend down the opposite right-hand side of the fuel cell apparatus 400 than the left-hand side it extends down as illustrated in FIG. 4(b). Further, it will be appreciated that other invention embodiments may be constructed using only connector portion(s) from any one or two of the layers 410, 414, or 418 for support, with the remaining one or two layers supported mechanically through their linkage with that layer. For example, it is contemplated that a connector portion 412 from the anode layer 410 could be used to support the anode layer, with the electrolyte layer 414 and the cathode layer 418 supported only through their linkage to the anode layer 408. Finally, it will be appreciated that the fuel cell apparatus 400 could alternatively be oriented with a cathode layer 418 underlying an electrolyte layer 414 and with a top most anode layer 410.

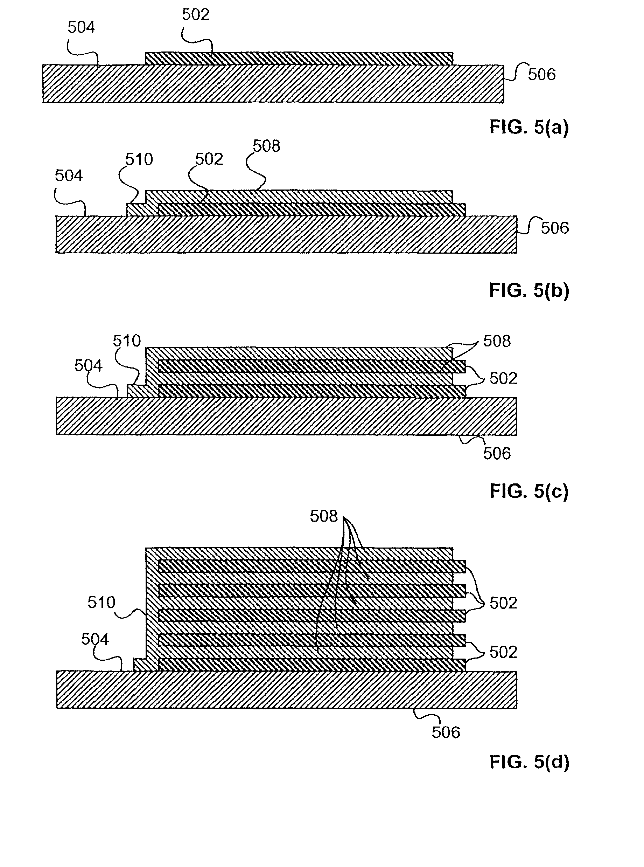

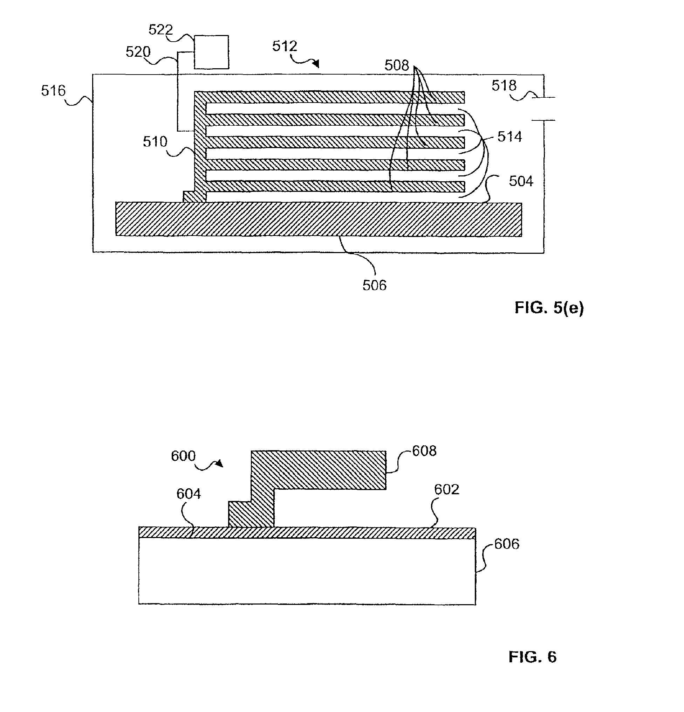

Those knowledgeable in the art will appreciate that an individual fuel cell such as 218 or 400 may provide only a relatively small amount of energy. Accordingly, in practice, a plurality of fuel cells connected in parallel or series may be used in combination to provide a useful amount of voltage and/or current for an electrical device. An additional exemplary embodiment of the present invention is a method for making a fuel cell apparatus that includes a plurality of fuel cells, while an additional exemplary apparatus embodiment is a fuel cell apparatus having a plurality of fuel cells. FIG. 5 will be useful in illustrating these invention embodiments. FIG. 5(a) illustrates a first sacrificial layer 502 being formed on a generally planar surface 504 of a substrate 506. A first fuel cell 508 is then formed on the first sacrificial layer 502. The fuel cell 508 has a connector 510 that connects it to the generally planar surface 504. The sacrificial layer 502, the fuel cell 508, and the connector 510 may be formed using steps typical in the art, such as vapor deposition, sputtering, and the like.

The fuel cell 508 has been illustrated for convenience as a single element in FIG. 5(b). It will be appreciated, however, that the fuel cell 508 may include a number of individual layers, such as an anode, a cathode, and an electrolyte layer, as well as current collectors. In addition, it will be appreciated that the connector 510 may include one or more connectors, and may, for example, include a connector integral with the anode layer and/or a connector integral with the cathode layer. By way of example, the fuel cell 508 may be generally consistent with the fuel cell 218 of FIGS. 2 and 3, or with the fuel cell 400 of FIG. 4, including dimensions, configuration, and preferred materials of construction. The sacrificial layer 502 likewise may be considered to be consistent in dimensions, configuration, and preferred materials of construction to the sacrificial layer 202 or 402.

FIG. 5(c) illustrates a second sacrificial layer 502 and a second fuel cell 508 formed over the first fuel cell 508. FIG. 5(d) illustrates a plurality of sacrificial layers 502 and individual fuel cells 506 stacked sequentially over the second fuel cell 508. Each of the plurality of individual fuel cells is connected to the substrate planar surface 504 by a connector 510. The connection may be direct in the form of, for instance, an integral anode and cathode layer connection so that one single connector 510 is formed, or may be in series to the fuel cell sequentially below it so that one single connector 510 is formed.

After a desired number of individual fuel cells 506 have been formed, the sacrificial layers 502 are removed, leaving the fuel cell apparatus shown generally at 512 in FIG. 5(e). A gap 514 is defined between each of the fuel cells 506 after removal of the sacrificial layers 502, so that the fuel cells 506 are generally free standing. Removal of the sacrificial layers 502 may be accomplished using steps typical to the art, such as etching and the like. The sacrificial layers 502 may be removed one at a time or may be removed simultaneously.

The fuel cell apparatus 512 is preferably contained in an enclosure such as a chamber 516 or the like having at least one or more ports 518 for communicating gas to the apparatus and exhaust from the chamber 516. The chamber 516 may be as desired and will be useful for a particular application. Also, a current collector 520 is preferably provided for communicating current from the fuel cell apparatus 512 to an electrical load such as a device 522. The current collector 520 has been illustrated as a single line. It will be appreciated, however, that in practice the current collector 520 must include at least two connections, one to the cathode layers and one to the anode layers for communicating electrons between them. Also, it will be appreciated that the current collector 520 may link the fuel cell apparatuses 512 to the device 522 in series or parallel. Finally, it will be appreciated that the present invention may be practiced with any number of individual fuel cells 508 as may be practical and desirable to develop current and/or voltage of a desired magnitude.

The freestanding configuration of the fuel cell apparatus 512 provides the apparatus with many advantages. For example, delamination, thermal stressing and cracking may be reduced as the fuel cells 506 are separated from the heat sink effects of the substrate 506. Also, the fuel cell apparatus 512 may advantageously use a substrate such as alumina that is advantageous because of its low cost and its relatively good thermal behavior, among other considerations. The stacked configuration of the fuel cell apparatus 512 also provides for advantages of convenience, compactness, and economy. For example, a plurality or even a multiplicity of fuel cells 506 may be provided in a single chamber with a relatively small footprint and stack height. This is desirable, for instance, when using the fuel cell apparatus 512 in a small or micro electronic device application. Additionally, the fuel cells 506 may be able to better maintain high operating temperatures due to the gaps 514.

FIG. 6 illustrates still an additional exemplary invention embodiment that may be useful to further enhance the ability of a fuel cell apparatus of the invention to maintain high operating temperatures. The fuel cell apparatus 600 is generally consistent with other fuel cells of the invention discussed herein, except that a reflective layer 602 has been provided on the generally planar surface 604 of the substrate 606. The reflective layer 602 is useful for insulating the substrate 606 from heat energy radiated or otherwise communicated from the fuel cell 608. This may be advantageous, for instance, when using the fuel cell apparatus 600 in an electronic device in which high temperatures are harmful to device performance. Preferably, the reflective layer 602 is infra-red ("IR") reflective. Examples of suitable reflective layers include metals that are catalytically passive to the fuel, that are not easily oxidized, and that have a relatively high melting point. Au is an example.

Preferably, the reflective layer 602 is deposited on the substrate 606, with a sacrificial layer then formed on the layer 602. When the sacrificial layer is removed, the reflective layer 602 remains to insulate the substrate 606. The reflective layer 602 may be formed using steps typical for layer formation, with examples including, but not limited to, vapor deposition, sputtering, CVD, CCVD, PVD, screen printing, slurry deposition, atomic layer deposition, and the like. An exemplary thickness range for the reflective layer 602 is between about 0.1 and about 10 microns.

While specific embodiments of the present invention have been shown and described, it should be understood that other modifications, substitutions and alternatives are apparent to one of ordinary skill in the art. Such modifications, substitutions and alternatives can be made without departing from the spirit and scope of the invention, which should be determined from the appended claims.

Various features of the invention are set forth in the appended claims.

## Claims

1. A method for making a thin film fuel cell apparatus comprising the steps of:
forming a first sacrificial layer (202) on a substrate (204);
forming a first fuel cell (208, 212, 214) on said first sacrificial layer (202), connecting said first fuel cell (208, 212, 214) to said substrate (202); and,
removing said first sacrificial layer (202) to define a gap (220) between said substrate (204) and said first fuel cell (208, 212, 214).

2. A method for making a thin film fuel cell as defined by claim 1 wherein the step of forming the fuel cell (208, 212, 214) comprises the steps of forming an anode layer (208), forming a cathode layer (214), and forming an electrolyte layer (212) sandwiched between said anode and (208) said cathode (214) layers.

3. A method for making a thin film fuel cell as defined by claim 2 wherein each of said anode layer (208), said cathode layer (214), and said electrolyte layer (212) is made of one of a ceramic or metal/ceramic composite, and wherein said substrate (204) comprises alumina.

4. A method for making a thin film fuel cell as defined by claim 2 wherein each of said anode layer (208), said cathode layer (214), and said electrolyte layer (212) has a thickness between about 0.5 micron and about 15 microns, and wherein said sacrificial layer (202) has a thickness of between about 0.1 and about 100 microns.

5. A method for making a thin film fuel cell as defined by claim 1 wherein the step of connecting said fuel cell (208, 212, 214) to said substrate (202) comprises forming a connector (210, 216) integral with said fuel cell (208, 212, 214) and connected to said substrate (202).

6. A method for making a thin film fuel cell apparatus as defined by claim 1 wherein the method further comprises the steps of:
forming a plurality of fuel cells (508) and sacrificial layers (502) on said first fuel cell (508) in an alternating sequence beginning with a sacrificial layer (502), connecting each of said fuel cells (508) in said alternating sequence to said substrate (504); and,
removing each of said sacrificial layers (502) from said alternating sequence to define a gap (xxx) separating each of said fuel cells (508).

7. A thin film fuel cell apparatus comprising:
a substrate (204) having a generally planar surface (206?);
a first fuel cell (208, 212, 214) supported over said generally planar surface (206?) by at least one connector (210, 216) to define a gap (xxx) between said first fuel cell (208, 212, 214) and said generally planar surface (206?).

8. A thin film fuel cell apparatus as defined by claim 7 further comprising a plurality of additional fuel cells (508) that are each connected to said substrate (604) by at least one connector (xxx), said plurality of additional fuel cells (508) disposed in a generally vertical stack over said first fuel cell (508) with a gap (xxx) defined therebetween, an additional gap (xxx) defined between each respective of said plurality of additional fuel cells (508).

9. An electronic device containing the thin film fuel cell defined by claim 7 and additionally comprising:
a chamber (xxx) enclosing said fuel cell apparatus (xxx), said chamber (xxx) having at least one port (xxx) for communicating gas; and,
a current collector (xxx) connected to said fuel cell (xxx) for communicating current to the electronic device (xxx).

10. A fuel cell apparatus for supplying current to an electric device, the fuel cell apparatus comprising:
a substrate having a generally planar surface;
a generally vertical stack of a plurality of fuel cells suspended over said substrate, a gap defined between said vertical stack and said generally planar surface, an additional gap defined between each of said plurality of fuel cells, said vertical stack connected to said substrate by at least one connector;
a chamber enclosing said plurality of fuel cells and at least a portion of said substrate, said chamber having at least one port for communicating gasses; and
a current collector linked to said plurality of fuel cells and to the electric device for communicating current from said plurality of fuel cells to the electric device.
